# EUROPÄISCHE PATENTSCHRIFT

(11) **EP 2 133 711 B1**
(45) Veröffentlichungstag und Bekanntmachung des Hinweises auf die Patenterteilung: **27.02.2013**
(21) Anmeldenummer: 08010824.4
(22) Anmeldetag: 13.06.2008
(51) Int. Cl.: G01S 13/82

(54) **Verfahren zur Abstandsmessung und Datenübertragung in einem Dauerstrich-Radarsystem**
Method for distance measuring and data transfer in a continuous wave radar system
Procédé de mesure de distance et transmission de données dans un système de radar à onde continue

(43) Veröffentlichungstag der Anmeldung: 16.12.2009
(73) Patentinhaber: SIEMENS AKTIENGESELLSCHAFT, 80333 München (DE)
(72) Erfinder: Albert, Olaf, 1150 Wien (AT); Gila, Janos, Dr., 2340 Mödling (AT); Hladik, Reinhard, 1210 Wien (AT); Schiefer, Martin, 3100 St. Pölten (AT); Spandl, Manfred, 1210 Wien (AT)

(56) Entgegenhaltungen:
- EP-A- 1 760 626
- EP-A- 1 903 412
- US-A- 5 712 639
- US-A- 5 796 362
- US-A1- 2003 034 887
- US-B1- 6 868 073
- KONNO K ET AL: "60 GHz Millimeter-Wave Dual Mode Radar for IVHS" TOPICAL SYMPOSIUM ON MILLIMETER WAVES, 1997, KANAGAWA, JAPAN, 7-8 JULY 1997, NEW YORK, NY, USA,IEEE, US, 7. Juli 1997 (1997-07-07), Seiten 159-161, XP010289054 ISBN: 978-0-7803-3887-6

## Beschreibung

Die vorliegende Erfindung betrifft ein Verfahren zur Abstandsmessung und Datenübertragung in einem Dauerstrich-Radarsystem. Ferner betrifft die vorliegende Erfindung ein Dauerstrich-Radarsystem mit einem Sende- und Empfangsmodul und mindestens einer Transpondervorrichtung, ein mobiles Bedien- und Beobachtungsgerät sowie ein HMI-System.

Radarsysteme eignen sich zur berührungslosen Lokalisierung und Abstandsbestimmung von Objekten. Unter einer Vielzahl verschiedener Radarsysteme ermöglicht z.B. ein frequenzmoduliertes Dauerstrich-Radarsystem, welches auch als Frequency Modulated Continous Wave (FMCW) Radar bezeichnet wird, eine zuverlässige Abstandsbestimmung zwischen Objekten, die auch z.B. nur gering voneinander entfernt sind. Hierbei kommt typischerweise keine gepulste, sondern kontinuierliche, d.h. continuous wave (CW) Radarstrahlung zum Einsatz.

Beim frequenzmodulierten Dauerstrich-Radarsystem unterliegt die Frequenz der ausgesendeten Radarsignale einer periodischen Modulation, wodurch ausgesendete und von einem Objekt reflektierte Radarsignale beim Wiedereintreffen in das Radarsystem eine Frequenzverschiebung im Vergleich zu den gesendeten Radarsignalen aufweisen, die einem Laufzeitunterschied entspricht. Dieser Laufzeitunterschied gibt den zweifachen Abstand zwischen dem Sende- und Empfangsmodul und dem reflektierenden Objekt wieder.

Zur Lokalisierung oder Entfernungsbestimmung des reflektierenden Objekts werden empfangene Radarsignale im Empfangsmodul typischerweise einer spektralen Analyse unterzogen. Beispielsweise geben einzelne Peaks oder Spitzen im Leistungsspektrum der Frequenzverschiebung direkt Aufschluss über die Entfernung zwischen dem Sende- und Empfangsmodul und dem reflektierenden Objekt. So entsprechen z.B. große Frequenzverschiebungen großen Laufzeitunterschieden der Radarsignale und somit großen Entfernungen, während kleine Frequenzverschiebungen kleinen Laufzeitunterschieden und somit kleinen Entfernungen entsprechen.

Der Einsatz eines Radarsystems zur Abstandsbestimmung zu einem bestimmten Objekt ist mitunter problematisch, da vielfältige äußere Faktoren den Empfang reflektierter Radarsignale massiv beeinträchtigen oder stören können. Insbesondere in der Anwesenheit von reflektierenden Metalloberflächen oder Körpern die Radarstrahlen absorbieren ist es nur bedingt möglich, ein empfangenes Radarsignal einem bestimmten reflektierenden Objekt zuzuordnen. Unter Einsatz eines Transponders oder einer Transpondervorrichtung kann dieses Problem zumindest eingeschränkt werden.

Eine Transpondervorrichtung ist typischerweise in der Lage ein moduliertes Funkantwortsignal in Reaktion auf ein Abfragesignal zu senden. Ist der Empfänger des Radarsystems auf die Modulation des Funkantwortsignals abgestimmt, so können mit Hilfe geeigneter Filtermethoden die von einer Transpondervorrichtung gesendeten Funkantwortsignale deutlich von Hintergrund- und sonstigen Störsignalen getrennt und zur Abstandsbestimmung ausgewertet werden. Transponder können als passive oder auch als aktive, d.h. leistungsverstärkende Transponder, ausgebildet sein.

Die von einer Transpondervorrichtung modulierten Funkantwortsignale ermöglichen eine Abstandsbestimmung zwischen der Transpondervorrichtung und dem Empfangsmodul des Radarsystems. Die Verwendung eines einzelnen Transponders erscheint nachteilig insbesondere im Hinblick auf sich fortlaufend ändernde Umgebungsbedingungen. Bewegen sich z.B. der Transponder und das Empfangsmodul des Radarsystems oder befinden sich absorbierende oder abschattende Körper temporär zwischen dem Transponder und dem Empfangsmodul, so ist der Empfang von Funkantwortsignalen sowie das Senden von Abfragesignalen an den Transponder massiv gestört, so dass eine Abstandsbestimmung unter Umständen nicht mehr möglich ist.

Für eine Lokalisierung bzw. Abstandsbestimmung zu einem großen räumlich ausgedehnten Objekt, wie z.B. einer Maschine, ist es daher zweckmäßig, mehrere Transponder um die Maschine herum anzuordnen, um somit zu gewährleisten, dass ein Austausch von Funksignalen zwischen dem Sende- und Empfangsmodul und mindestens einem Transponder jederzeit möglich ist.

Aus dem Stand der Technik ist ein Dauerstrich-Radarsystem mit einer räumlich verteilten Anordnung verschiedener Transponder bekannt, welches ein Funkantwortsignal eindeutig einem der Transponder zuordnen kann. Das Funkantwortsignal wird in dem Transponder einer ersten Modulation unterzogen, so dass das Empfangsmodul eine Abstandsbestimmung zwischen dem Sende- und Empfangsmodul und dem Transponder durchführen kann. Des Weiteren wird das Funkantwortsignal in dem Transponder einer zweiten Modulation unterzogen, um eine Datenübertragung zwischen dem mindestens einen Transponder und dem Sende- und Empfangsmodul durchzuführen. Beispielsweise kann so eine Transponder-ID übertragen werden, um den entsprechenden Transponder eindeutig zu identifizieren.

Dabei ist ein Abfragesignal, welches von dem Sende- und Empfangsmodul ausgesendet wird und in Reaktion auf welches der Transponder das Funkantwortsignal sendet, ein frequenzmoduliertes Dauerstrichsignal (FMCW-Signal). Das heißt, das FMCW-Signal wird sowohl für eine Datenübertragung als auch für eine Abstandsmessung verwendet. Das Abfragesignal wird üblicherweise fortlaufend ausgesendet, um nach Transpondern zu suchen, also auch, wenn keine Transponder zur Kommunikation mit dem Sende- und Empfangsmodul vorhanden sind. Nachdem jedoch die Frequenz eines FMCW-Signals einer periodischen Modulation unterliegt, ist es sehr wahrscheinlich, dass sich benachbarte Sende- und Empfangsmodule, welche durchgehend ein FMCW-Signal aussenden, gegenseitig beeinflussen, so dass keine zuverlässige Abstandsmessung durchführbar ist. Ferner kann ein Sende- und Emfpangsmodul, welches ständig ein FMCW-Signal aussendet, andere Systeme stören, welche im gleichen Frequenzbereich arbeiten, beispielsweise ein WLAN-System. Diese Probleme treten natürlich auch dann auf, wenn das FMCW-Signal nur temporär ausgesendet wird. Außerdem kann ein FMCW-Signal auch eine Datenübertragung in einem Dauerstrich-Radarsystem von einem Transponder zu einem Sende- und Empfangsmodul stören, da das Abfragesignal üblicherweise sehr viel stärker ist als das Funkantwortsignal.

In KONNO K ET AL: "60 GHz Millimeter-Wave Dual Mode Radar for IVHS" Topical Symposium On Millimeter Waves, 1997, Kanagawa, Japan, 7-8 July 1997, Seiten 159-161, ISBN: 978-0-7803-3887-6, wird ein Kommunikationssystem beschrieben, welches in zwei unterschiedlichen Modi betrieben werden kann. Eine Basisstation sendet in einem ersten Modus ein unmoduliertes Dauerstrichsignal und in einem zweiten Modus ein frequenzmoduliertes Dauerstrichsignal aus, wobei ein Modusauswahlsignal der Basisstation die Betriebsart bestimmt.

Die US 6868073 B1 beschreibt eine Abstandsmessung zwischen zwei Transpondern. Ein erster Transponder sendet ein unmoduliertes Signal an einen zweiten Transponder, um dessen Identität festzustellen. Der zweite Transponder sendet seine Identität mittels eines Antwortsignals an den ersten Transponder, welcher die Gültigkeit der Identität überprüft. Wird die Gültigkeit bestätigt, sendet der erste Transponder eine Bestätigung an den zweiten Transponder, welcher nach Empfang dieser Bestätigung in einen Abstandsbestimmungsmodus wechselt.

Die EP 1 903 412 A1 beschreibt ein Verfahren zur Freigabe der Bedienung von Automatisierungskomponenten einer technischen Anlage über ein mobiles Bedien- und Beobachtungsgerät. Das Bedien- und Beobachtungsgerät empfängt eine erste Kennung einer ersten Transpondervorrichtung. Dann sendet das Bedien- und Beobachtungsgerät ein frequenzmoduliertes Trägersignal, welches von der ersten Transpondervorrichtung reflektiert wird, wodurch das Bedien- und Beobachtungsgerät den Abstand zur Transpondervorrichtung bestimmen kann.

Der Erfindung liegt die Aufgabe zu Grunde, ein Dauerstrich-Radarsystem so weiterzugestalten, dass eine Abstandsmessung zwischen einer Transpondervorrichtung und einem Sende- und Empfangsmodul sowie eine Datenübertragung von der Transpondervorrichtung zu dem Sende- und Empfangsmodul zuverlässig durchgeführt werden können, insbesondere ohne andere Systeme zu beeinflussen.

Die Aufgabe wird mit den Merkmalen der unabhängigen Patentansprüche gelöst. Weitere vorteilhafte Ausführungen der Erfindung sind in den Unteransprüchen angegeben.

Ein erster Aspekt der vorliegenden Erfindung betrifft ein Verfahren zur Abstandsmessung und Datenübertragung in einem Dauerstrich-Radarsystem, in welchem ein Sende- und Empfangsmodul und mindestens eine Transpondervorrichtung angeordnet sind. Das Sende- und Empfangsmodul erzeugt ein unmoduliertes Dauerstrichsignal mit einer vorbestimmten Frequenz als ein Abfragesignal, mit dessen Hilfe eine Transpondervorrichtung gesucht wird. Nur wenn das Sende- und Empfangsmodul ein Funkantwortsignal von einer Transpondervorrichtung empfängt, welches in Reaktion auf das Abfragesignal erzeugt wird, wird ein frequenzmoduliertes Dauerstrichsignal erzeugt. Mit Hilfe dieses frequenzmodulierten Dauerstrichsignals wird ein Abstand zwischen dem Sende- und Empfangsmodul und der Transpondervorrichtung gemessen, welche das Frequenzantwortsignal an das Sende- und Empfangsmodul sendet.

Erfindungsgemäß werden Transpondervorrichtungen somit mit Hilfe eines unmodulierten Dauerstrichsignals (CW-Signal) gesucht, welches eine vorbestimmte Frequenz hat. Dadurch kann die Frequenz des unmodulierten Dauerstrichsignals so gewählt werden, dass sie in einem Frequenzbereich liegt, der von keinem anderen System verwendet wird. Somit lassen sich Störungen anderer Systeme vermeiden. Des Weiteren wird das frequenzmodulierte Dauerstrichsignal (FMCW-Signal) ausschließlich für eine Abstandsmessung zwischen dem Sende- und Empfangsmodul und der mindestens einen Transpondervorrichtung verwendet, welche beispielsweise durch eine spektrale Analyse und die Bestimmung einer Frequenzverschiebung des Funkantwortsignals bezüglich des ausgesendeten FMCW-Signals durchgeführt wird. Dadurch ist es möglich, dass das FMCW-Signal nur für eine sehr kurze Zeit ausgesendet wird, beispielsweise 10 Millisekunden je Sekunde. Folglich besteht eine nur sehr geringe Wahrscheinlichkeit von Störungen zwischen diesen Systemen, wodurch eine Koexistenz unterschiedlicher Sende- und Empfangsmodule und anderer Systeme, wie z.B. eines WLAN-Systems, deutlich verbessert wird.

In einer Ausführungsform der vorliegenden Erfindung umfasst das Sende- und Empfangsmodul einen komplexen (komplexwertigen) Empfänger, welcher eine Decodierung der durch das Funkantwortsignal übertragenen Daten und eine Abstandsmessung basierend auf dem empfangenen Funkantwortsignal durchführt. Dafür umfasst der komplexe Empfänger entsprechende Auswertemittel zur Analyse des komplexen Funkantwortsignals, welche im Stand der Technik bekannt sind.

In einer alternativen, besonders bevorzugten Ausführungsform der vorliegenden Erfindung wird die Phase des abgestrahlten unmodulierten Dauerstrichsignals gegenüber den Empfangslokaloszillator mit einer vorbestimmten Frequenz vorzugsweise um +/- 90° verschoben. Die Modulationsform ist beispielsweise ein Rechteck, wobei die Modulationsfrequenz beispielsweise ca. 8 kHz beträgt. Im Basisband kann diese zusätzliche Modulationskomponente unterdrückt werden, um so die von einer Transpondervorrichtung übertragenen Daten in dem Sende- und Empfangsmodul zu gewinnen. Die Umstellung der Phase des unmodulierten Dauerstrichsignals mit der Hilfsmodulation von ca. 8 kHz führt zwar zu einer Verschlechterung eines Signal zu Rauschverhältnisses (SNR) um 3 dB im Vergleich zu einem komplexen Empfänger. Dafür kann jedoch das Funkantwortsignal (Backscatter-Signal) der Transpondervorrichtung mit einem reellen Empfänger demoduliert werden, wie nachfolgend noch im Detail beschrieben wird. Im Vergleich zu herkömmlichen reellen Systemen, welche ausschließlich mit einem breitbandigen FMCW-Signal das Funkantwortsignal dekodieren, entsteht im erfindungsgemäßen System kein zusätzlicher Verlust.

Die Phasenverschiebung kann entweder im Sende- und Empfangsmodul oder in der Transpondervorrichtung implementiert sein.

In einer weiteren Ausführungsform der vorliegenden Erfindung wird die vorbestimmte Frequenz des unmodulierten Dauerstrichsignals während des Suchens einer Transpondervorrichtung umgetastet. Diese Frequenzumtastung erfolgt in der Sende- und Empfangsmodul. Beispielsweise wird die vorbestimmte Frequenz innerhalb des ISM-Bands zwischen 2,400 GHz und 2,483 GHz mit einer Frequenz von beispielweise ca. 4 kHz umgetastet. Damit wird ein eventuelles Fading bekämpft. Ein Vorteil der Verwendung des ISM-Bands für das unmodulierte Dauerstrichsignal besteht darin, dass es lizenzfrei ist und Geräte, welche dieses Band einsetzen, praktisch auf der ganzen Welt ohne eine länderspezifische Einstellung zugelassen werden können.

Sowohl die Phasenverschiebung als auch die Frequenzumtastung erzeugen jedoch parasitäre Modulationen, welche im Sende- und Empfangsmodul unterdrückt werden müssen. Diese Unterdrückung kann beispielsweise mit Hilfe geeigneter Filter erfolgen, welche jedoch die von der Transpondervorrichtung empfangenen Daten durchlassen müssen. Ferner muss bei der Filterimplementierung auf die Gruppenlaufzeit geachtet werden, um eine Inter Symbol Interference (ISI) zu vermeiden. Beispielhafte Filter, welche sich zur Unterdrückung der parasitären Modulationen eignen, sind beispielsweise ein Boxcar-Filter, ein CIC-Filter oder ein IIR-Filter. Wird in dem Sende- und Empfangsmodul die optionale Frequenzumtastung der Frequenz des unmodulierten Dauerstrichsignals implementiert, so ist das Boxcar-Filter unter den genannten Filtern bevorzugt, da es aufgrund seiner Polstellen sowohl die Phasenmodulation als auch die Frequenzumtastung sehr gut unterdrücken kann. Ist nur die Phasenverschiebung implementiert, entweder in dem Sende- und Empfangsmodul oder in der Transpondervorrichtung, so liefert nach derzeitigen Erkenntnissen das CIC-Filter eine bessere Unterdrückung der parasitären Modulation als das IIR Filter. Jedes der genannten, beispielhaften Filter besitzt dabei die Eigenschaft, dass die von der Transpondervorrichtung in dem Sende- und Empfangsmodul empfangenen Daten problemlos demoduliert werden können.

In einer weiteren bevorzugten Ausführungsform der Erfindung umfasst das Sende- und Empfangsmodul einen Mischer zur Erzeugung eines reellen Signals aus einem empfangenen Funkantwortsignal. Des Weiteren umfasst das Sende- und Empfangsmodul vorzugsweise eine Auswerteeinheit zur Abstandsmessung sowie eine Demodulationseinheit zur Dekodierung der durch das Funkantwortsignal übertragenen Daten, wobei die Abstandsmessung und die Dekodierung basierend auf dem reellen Signal erfolgen. Besonders bevorzugt erfolgt die komplette Signalauswertung empfangener Funkantwortsignale auf der Basis reeller Signale, so dass auf Auswertemittel zur Analyse komplexer Signale verzichtet werden kann. Dies ermöglicht insbesondere, das Sende- und Empfangsmodul platzsparend und kostengünstig zu realisieren.

Der Mischer ist dazu ausgebildet, das empfangene Funkantwortsignal mit dem Sendesignal zu mischen. Das Spektrum eines aus dieser Mischung erhaltenen reellen Nutzsignals kann dann durch die Auswerteeinheit zur Abstandsbestimmung mit FMCW-Signal und zur Datendekodierung mit CW- Signal genutzt werden.

Die Implementierung der reellen Radarsignal-Auswertung ermöglicht eine wesentliche Verringerung der Bauteilgröße und Bauteilkosten im Vergleich zu einer komplexen Auswertung, die eine I/Q Demodulation des empfangenen Radarsignals erfordert. Daher kann durch den Einsatz eines reellen Empfängers und einer reellen Auswerteeinheit eine erforderliche Bauteilgrößenbegrenzung eingehalten werden, beispielsweise für ein mobiles Bedien- und Beobachtungsgerät, welches das obige Sende- und Empfangsmodul eines Dauerstrich-Radarsystems enthält, in welchem ein Suche von Transpondervorrichtungen sowie eine anschließenden Datenübertragung von einer gefundenen Transpondervorrichtung zu dem Sende- und Empfangsmodul mit Hilfe eines unmodulierten Dauerstrichsignals durchgeführt wird. Zudem ermöglicht die reelle Implementierung der Empfangsmittel und Auswertemittel eine Kosteneinsparung.

In einer noch weiteren Ausführungsform der vorliegenden Erfindung wird ein vorbestimmter Frequenzbereich, beispielsweise das ISM-Band zwischen 2,400 GHz und 2,483 GHz, abgetastet, bevor das unmodulierte Dauerstrichsignal als ein Abfragesignal erzeugt wird. Dadurch kann sichergestellt werden, dass für die Frequenz des unmodulierten Dauerstrichsignals eine freie Frequenz in dem abgetasteten Frequenzbereich gewählt wird, das heißt eine Frequenz, die nicht belegt ist. Mit anderen Worten wird ein Spektrum-Monitoring durchgeführt, bevor das unmodulierte Dauerstrichsignal mit einer vorbestimmten Frequenz erzeugt wird. Denn gerade im ISM-Band arbeitet eine Vielzahl von Geräten, beispielsweise WLAN-Geräte, wodurch ohne eine vorherige Abtastung die Gefahr besteht, dass eine bereits belegte Frequenz für das unmodulierte Dauerstrichsignal ausgewählt wird. Somit kann eine Wahrscheinlichkeit, dass das Sende- und Empfangsmodul andere Geräte stört beziehungsweise durch andere Geräte gestört wird, deutlich reduziert werden.

In einer noch weiteren Ausführungsform der vorliegenden Erfindung ist das Sende- und Empfangsmodul eingerichtet, um das unmodulierte Dauerstrichsignal nach erfolgter Datendekodierung und/oder erfolgter Abstandsmessung für eine vorbestimmte Zeit erneut zu erzeugen. Das heißt, sobald die Datendekodierung mittels CW- Signal und/oder die Abstandsmessung mittels des FMCW-Signals abgeschlossen ist, beispielsweise nach 10 Millisekunden, wird das FMCW-Signal abgeschaltet und erneut ein CW-Signal erzeugt. Dieser Schritt kann beispielsweise durch die Eigenschaften des Sende- und Empfangsmoduls bedingt sein. Jedoch wird auch dieses CW-Signal nach einer vorbestimmten Zeit abgestellt, um eine unnötige Aussendung des CW-Signals zu vermeiden. Dadurch wird die Koexistenz noch weiter verbessert.

Ein weiterer Aspekt der vorliegenden Erfindung betrifft ein mobiles Bedien- und Beobachtungsgerät für die Automatisierungskomponenten einer technischen Anlage, welches ein oben beschriebenes Sende- und Empfangsmodul umfasst. Zur Vermeidung einer Steuerung des Automatisierungssystems durch das mobile Bedien- und Beobachtungsgerät aus einer unzulässigen Entfernung ist es vorteilhaft, das Bedien- und Beobachtungsgerät zu lokalisieren und abhängig von seiner Position sicherheitsrelevante Bedienungen der technischen Anlage freizugeben oder zu deaktivieren. Dazu wird die Abstandsmessung durchgeführt, um detektieren zu können, ob sich das mobile Bedien- und Beobachtungsgerät innerhalb eines aktiven Bedienbereichs befindet.

Ein noch weiterer Aspekt der vorliegenden Erfindung betrifft ein HMI (Human Machine Interface) System, umfassend mindestens ein solches mobiles Bedien- und Beobachtungsgerät. Der Begriff HMI Gerät ist ein Oberbegriff und umfasst alle zu dieser Gruppe von Geräten gehörigen Komponenten. Als ein Beispiel sollen "Operator Panels", auch als "Bedienpanels" bzw. kurz als "OP" bezeichnet, genannt werden. Diese können stationär oder mobil ausgeführt sein. HMI Geräte dienen in einer vernetzten Automatisierung als Hilfsmittel für Bedienpersonal, um Prozessdaten der zu steuernden technischen Anlage anzeigen oder bedienen zu können. Diese Funktion wird mit "Supervisor Control and Data Akquisition"(SCADA) bezeichnet. Hierzu ist das HMI Gerät in der Regel hardwaremäßig speziell aufgebaut, d.h. es verfügt z.B. über einen Touchscreen und ist gegen Umwelteinflüsse besonders abgeschirmt. Weiterhin wird darin eine spezielle Software ausgeführt. Diese stellt Funktionen bereit, womit Komfort, Qualität und Sicherheit einer Bedienung durch eine Bedienperson verbessert werden. So können über HMI Geräte z.B. interaktive Prozessabbilder der zu bedienenden technischen Anlage visualisiert, bedient, projektiert und generiert werden. Hiermit ist einerseits eine selektive Anzeige von Reaktionen der technischen Anlage möglich, meist in Form von Messwerten und Meldungen. Andererseits wird es durch gezielte Vorgabe von Bedienhandlungen und Dateneingaben ermöglicht, die technische Anlage in gewünschte Zustände zu überführen.

Bevorzugte Ausführungsbeispiele der Erfindung werden nachfolgend anhand der Zeichnungen näher erläutert.
- Figur 1: zeigt ein Blockdiagramm eines Dauerstrich-Radarsystems;
- Figur 2: zeigt ein Blockdiagramm eines HMI-Systems;
- Figur 3: zeigt ein Flussdiagramm eines erfindungsgemäßen Verfahrens.

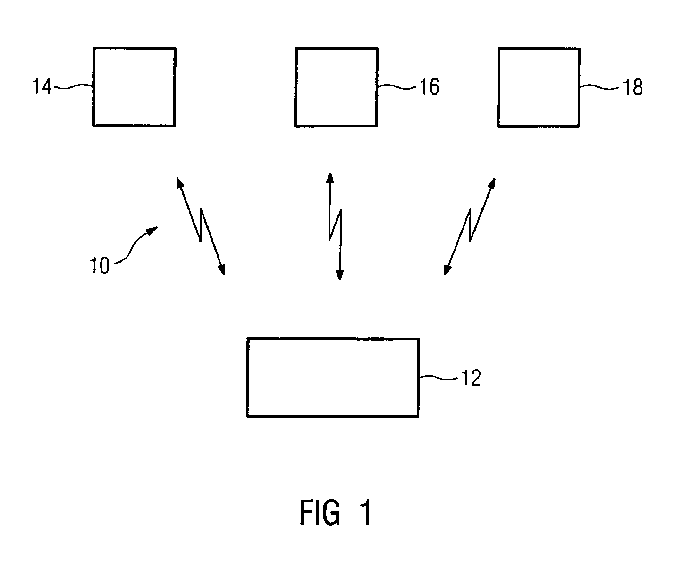

Figur 1 zeigt ein schematisches Blockdiagramm eines Ausführungsbeispiels eines Dauerstrich-Radarsystems 10, welches über drei Transponder 14, 16, 18 und ein Sende- und Empfangsmodul 12 verfügt. Das Sende- und Empfangsmodul 12 ist eingerichtet, um Abfragesignale auszusenden, die von den Transpondern 14, 16, 18 empfangen, moduliert, gegebenenfalls verstärkt und als Funkantwortsignale wieder zurück gesendet werden. Die Trägerfrequenz des Abfragesignals bzw. der Funkantwortsignale bleibt hierbei unverändert (sogenanntes Back-Scattering) und liegt typischerweise im GHz-Bereich, z.B. im ISM-Band zwischen 2,400 GHZ und 2,483 GHz.

Das Abfragesignal ist ein unmoduliertes Dauerstrichsignal (CW-Signal). Allerdings sendet das Sende- und Empfangsmodul 12 ein frequenzmoduliertes Dauerstrichsignal (FMCW-Signal) anstelle des unmodulierten Dauerstrichsignals aus, sobald ein Transponder ein Funkantwortsignal in Reaktion auf das Abfragesignal gesendet hat. Mit Hilfe des frequenzmodulierten Signals wird dann eine Abstandsmessung zwischen dem Transponder und dem Sende- und Empfangsmodul 12 durchgeführt. D. h., eine Daten- bzw. Informationsübertragung von dem Transponder an das Sende- und Emfpangsmodul und eine Abstandsmessung zwischen diesen werden sequentiell durchgeführt, wobei das FMCW-Signal ausschließlich zur Abstandsmessung verwendet wird.

Für eine bessere Unterscheidung zwischen Funkantwortsignalen und Signalen, die an anderen beliebigen Objekten reflektiert werden, unterliegen die von den Transpondern 14, 16, 18 ausgesendeten Funkantwortsignale einer ersten Modulation mit einer Subträgerfrequenz (z.B. 450 kHz). Die so modulierten Funkantwortsignale werden im Sende- und Empfangsmodul 12 mit dem Abfragesignal gemischt und somit auf die Subträgerfrequenz umgesetzt. Mit entsprechenden Filtern können somit störende Hintergrundsignale effektiv beseitigt werden.

Diese erste Subträgermodulation wird in allen drei Transpondern 14, 16, 18 gleichermaßen durchgeführt. Sie erlaubt lediglich eine Trennung zwischen Signalen, die von Transpondern ausgesendet werden und Signalen, die z.B. an Metalloberflächen reflektiert werden. Typischerweise wird das Dauerstrich-Radarsystem zur Lokalisierung des Sende- und Empfangsmoduls verwendet. Hierzu befinden sich die Transponder 14, 16, 18 an vorbestimmten Referenzpunkten und sind räumlich voneinander getrennt. Da nun mit Hilfe der ersten Modulation auf Basis empfangener Funkantwortsignale nicht unterschieden werden kann, von welchem der drei Transponder 14, 16, 18 ein empfangenes Funkantwortsignal ausgesendet wird, werden die Funkantwortsignale einer zweiten Modulation unterzogen, die eine Datenübertragung zwischen einer Transpondervorrichtung 14, 16, 18 und dem Sende- und Empfangsmodul 12 ermöglicht.

Typischerweise erfolgt diese zweite Modulation in Systemen mit reeller Signalverarbeitung mittels Amplitudenmodulation, wie z.B. einer On/Off-Keying Modulation (OOK), da Phasenmodulationen nur mit komplexen Signalverarbeitungsverfahren effizient demoduliert werden können. Diese ermöglicht, dass das Funkantwortsignal mit einer binären Sequenz ein- oder ausgeschaltet wird. Somit kann ein informationstragender zeitlicher Code auf der Basis des Funkantwortsignals von einer der Transpondervorrichtungen 14, 16, 18 zum Sende- und Empfangsmodul 12 übertragen werden. Die codierte Information enthält vorzugsweise einen Identifizierungscode, der für jede Transpondervorrichtung 14, 16, 18 fest vorgegeben ist. Das Sende- und Empfangsmodul verfügt über entsprechende Demodulationsmittel und ist daher in der Lage, ein empfangenes Funkantwortsignal eindeutig einer der drei gezeigten Transpondervorrichtungen 14, 16, 18 zuzuordnen.

Werden z.B. mehrere Funkantwortsignale von verschiedenen Transpondern 14, 16, 18 empfangen und ausgewertet, so können die gewonnenen Abstandsdaten unter Kenntnis der Positionen der einzelnen Transponder 14, 16, 18 für eine genaue Lokalisierung oder Positionsbestimmung des Sende- und Empfangsmoduls effektiv genutzt werden.

Ein weiterer Vorteil des Dauerstrich-Radarsystems gemäß dem dargestellten Ausführungsbeispiel besteht darin, dass selbst bei einer Unterbrechung oder teilweisen Abschattung einer Funkübertragung zwischen dem Sende- und Empfangsmodul 12 und z.B. dem Transponder 18, nach wie vor Funkantwortsignale von den verbleibenden Transpondern 14 und 16 empfangen und ausgewertet werden können. Das Dauerstrich-Radarsystem erfordert lediglich den Empfang von Funkantwortsignalen von mindestens einem Transponder, um zumindest einen Abstand zwischen Sende- und Empfangsmodul 12 und einem der Transponder 14, 16, 18 berechnen zu können.

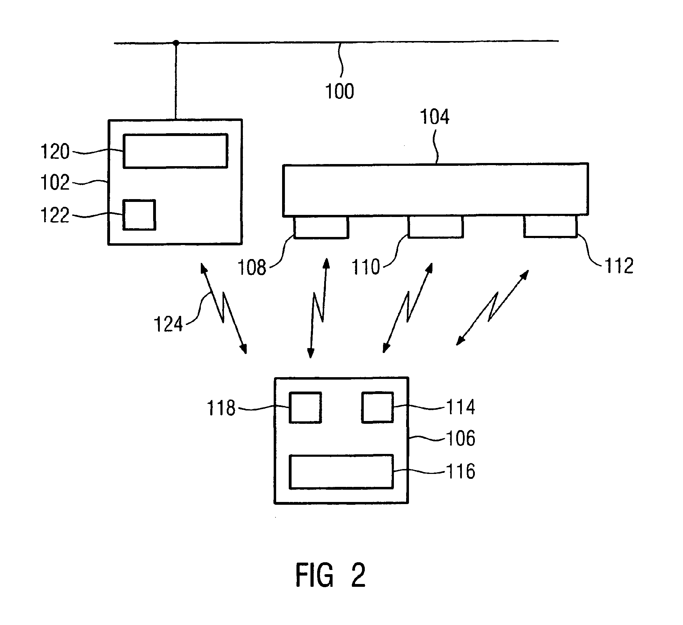

Figur 2 zeigt ein Blockdiagramm eines HMI-Systems, umfassend eine technische Anlage 104 mit technischen Betriebsmitteln und ein Bedien- und Beobachtungsgerät 106 mit einem erfindungsgemäßen Sende- und Empfangsmodul. Die technischen Betriebsmittel sind z.B. Bestandteil einer fertigungs- oder prozesstechnischen Vorrichtung. Zu deren Steuerung sind Automatisierungskomponenten 102 vorhanden, die auf die technischen Betriebsmittel, insbesondere durch Vermittlung von Messwertgebern, Stellungsreglern und verschiedenen anderen sogenannten "Process Instruments" eingreifen. Die Automatisierungskomponenten 102 verfügen beispielhaft über ein Automatisierungsgerät, wie z.B. eine speicherprogrammierbare Steuerung 120, welches die Steuerung der technischen Betriebsmittel gegebenenfalls in Echtzeit bewirkt.

Die Automatisierungskomponenten 102 sind vorzugsweise an ein Bussystem 100, wie z.B. einen Profibus, angegliedert. Dies ermöglicht eine universelle Vernetzung mehrerer Automatisierungskomponenten 102.

Zur Bedienung und Beobachtung der Automatisierungskomponenten 102 und z.B. von deren ablaufenden Steuerungs-, Diagnose-, Alarmverarbeitungs- und Langzeitbeobachtungsprozessen ist zumindest ein mobiles Bedien- und Beobachtungsgerät 106 vorhanden. Dieses kann z.B. als ein kabelloses Hand-Held Terminal ausgeführt sein und z.B. über ein Display und eine Tastatur 116 verfügen. Weiterhin können Not-, Aus- und Quittungstasten und Schlüsselschalter vorgesehen sein. Das mobile Bedien- und Beobachtungsgerät 106 tauscht in einer berührungslosen Weise Nutzdaten über eine Funkstrecke 124 mit den Automatisierungskomponenten 102 der technischen Anlage 104 aus. Eine Bedienperson, die das Bedien- und Beobachtungsgerät 106 gebraucht, kann sich somit z.B. Messwerte von der technischen Anlage 104 auf dem Display des Bedien- und Beobachtungsgeräts 106 anzeigen lassen, bzw. Steuerbefehle über dessen Tastatur 116 eingeben und diese an die Automatisierungskomponenten 102 senden.

Zur Übermittlung von z.B. Messwerten und Steuerbefehlen zwischen dem mobilen Bediengerät 106 und den Automatisierungskomponenten 102 verfügen das mobile Bediengerät 106 sowie die Automatisierungskomponenten 102 über entsprechende Datenübertragungsmodule 118, 122. Diese Datenübertragung wird vorzugsweise mit Hilfe von Radiofrequenz (RF) Signalen realisiert. Hierbei können eine Vielzahl von verschiedenen Datenübertragungsprotokollen, wie z.B. WLAN, IEEE 802.11, Ultra Wide Band (UWB) oder BlueTooth Protokolle zum Einsatz kommen.

Das mobile Bediengerät 106 verfügt zudem über ein Lokalisierungsmodul 114, das zum Senden und zum Empfangen von Radarsignalen ausgebildet ist. Ferner verfügt die technische Anlage 104 über mindestens einen Transponder. Vorzugsweise verfügt die Anlage über eine Reihe von Transpondern 108, 110, 112, die an verschiedenen Referenzpunkten an der technischen Anlage 104 angebracht sind. Die Transponder sind dazu ausgebildet, die vom Lokalisierungsmodul 114 ausgesendeten Radarsignale zu modulieren und zu reflektieren. Die von den Transpondern 108, 110, 112 modulierten und reflektierten Radarsignale können dann von dem Lokalisierungsmodul 114 empfangen und zur Lokalisierung des mobilen Bediengeräts 106 ausgewertet werden. Das mobile Bediengerät 106 ist somit in der Lage, eine Positions- oder Abstandsbestimmung von den Transpondern 108, 110, 112 selbsttätig durchzuführen. Die Transponder 108, 110, 112 müssen hierbei keine Signalauswertung vornehmen.

In einer erfindungsgemäßen Weiterbildung des HMI-Systems ist das Lokalisierungsmodul 114 mit einem oben beschriebenen Sende- und Empfangsmodul ausgestattet. Mittels einer von den Transpondern 108, 110, 112 durchgeführten Subträger-Modulation können die von den Transpondern reflektierten Radarsignale selektiv ausgewertet werden. Die Subträger-Modulation ermöglicht somit eine Trennung von Hintergrundsignalen und Signalen, die an den Transpondern reflektiert wurden. Durch eine entsprechende Subträger-Filterung im Lokalisierungsmodul 114 kann somit mit Hilfe des nur kurzzeitig ausgesendeten FMCW-Radars eine eindeutige Entfernungsmessung für quasistationäre Ziele sogar mit einem Empfänger der lediglich für eine reelle Signalauswerten ausgelegt ist im Lokalisierungsmodul 114 realisiert werden.

Quasistationär bedeutet in diesem Zusammenhang, dass während der Messzeit, die typischerweise im Bereich einiger ms bis einiger 10 ms liegt, sich die Position der Transponder bzw. die Position des Radarsystems nicht verändert.

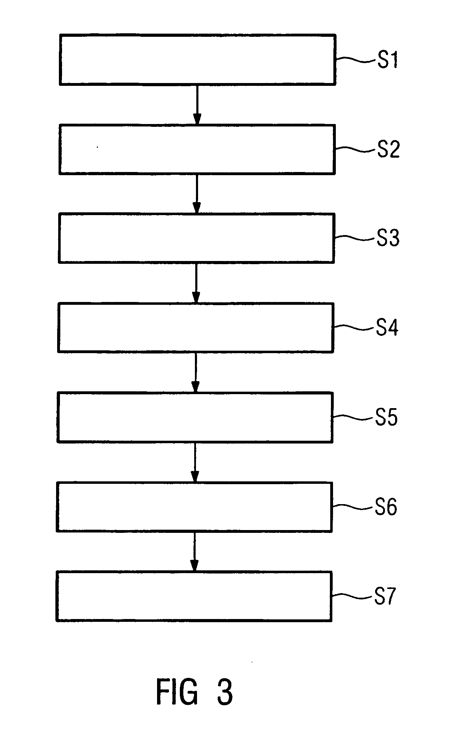

Figur 3 zeigt ein Flussdiagram eines bevorzugten Ausführungsbeispiels eines erfindungsgemäßen Verfahrens zur Abstandsmessung und Datenübertragung in einem Dauerstrich-Radarsystem, in welchem ein Sende- und Empfangsmodul und mindestens eine Transpondervorrichtung angeordnet sind. In einem ersten Schritt S1 wird ein vorbestimmter Frequenzbereich abgetastet, um diesen Frequenzbereich darauf hin zu untersuchen, welche Frequenzbänder noch frei sind und nicht durch andere Geräte oder Systeme belegt werden. Dann wird in einem zweiten Schritt S2 ein unmoduliertes Dauerstrichsignal mit einer Frequenz erzeugt, die in einem freien Frequenzband liegt. In einem dritten Schritt S3 wird eine Transpondervorrichtung mit Hilfe des unmodulierten Dauerstrichsignals als ein Abfragsignal gesucht. Dabei sind Transpondervorrichtungen des Dauerstrich-Radarsystems derart eingerichtet, dass sie in Reaktion auf das Abfragesignal ein Funkantwortsignal an das Sende- und Empfangsmodul senden (Schritt S4).

Sobald das Sende- und Empfangsmodul ein Funkantwortsignal empfängt, wird das Erzeugen des unmodulierten Dauerstrichsignals gestoppt und anstelle dessen ein frequenzmoduliertes Dauerstrichsignal erzeugt (Schritt S5). Mit Hilfe des frequenzmodulierten Dauerstrichsignals wird in einem Schritt S6 ein Abstand zwischen dem Sende- und Empfangsmodul und der Transpondervorrichtung gemessen, welche das Funkantwortsignal sendet. Vorzugsweise wird nach einer erfolgten Abstandsmessung in einem Schritt S7 das unmodulierte Dauerstrichsignal für eine vorbestimmte Zeit erneut erzeugt, wobei dieser Schritt auch unmittelbar nach Schritt S4 erfolgen kann (nicht dargestellt). Das heißt, das unmodulierte Dauerstrichsignal wird für eine vorbestimmte Zeit erneut erzeugt, nachdem das Sende- und Empfangsmodul ein Funkantwortsignal von einer Transpondervorrichtung empfangen hat. Dies ist dann vorteilhaft, wenn ein Transponder das Funkantwortsignal sendet, welcher in der aktuellen Anwendung keine beziehungsweise keine ausschlaggebende Rolle spielt. So kann eine unnötige Abstandsmessung zu diesem Transponder umgangen und anstatt dessen direkt mit einer erneuten Suche nach einem relevanten Transponder begonnen werden.

## Patentansprüche

1. Verfahren zur Abstandsmessung und Datenübertragung in einem Dauerstrich-Radarsystem (10), in welchem ein Sende- und Empfangsmodul (12) und mindestens eine Transpondervorrichtung (14, 16, 18; 108, 110, 112) angeordnet sind, umfassend die Schritte:
- Erzeugen (S2) eines unmodulierten Dauerstrichsignals mit einer vorbestimmten Frequenz in dem Sende- und Empfangsmodul, wobei vor dem Erzeugen eines unmodulierten Dauerstrichsignals ein vorbestimmter Frequenzbereich abgetastet wird (S1), um freie Frequenzbänder zu bestimmen, und wobei die vorbestimmte Frequenz des unmodulierten Dauerstrichsignals in einem freien Frequenzband liegt,
- Suchen (S3) einer Transpondervorrichtung mit Hilfe des unmodulierten Dauerstrichsignals als ein Abfragesignal,
- Senden (S4) eines Funkantwortsignals in Reaktion auf das Abfragesignal von einer Transpondervorrichtung an das Sende- und Empfangsmodul,
- Erzeugen (S5) eines frequenzmodulierten Dauerstrichsignals in dem Sende- und Empfangsmodul in Reaktion auf das Funkantwortsignal, und
- Messen (S6) eines Abstands zwischen dem Sende- und Empfangsmodul und der Transpondervorrichtung mit Hilfe des frequenzmodulierten Dauerstrichsignals.

2. Verfahren nach Anspruch 1, wobei die Abstrahlfrequenz des unmodulierten Dauerstrichsignals während des Suchens einer Transpondervorrichtung in dem Sende- und Empfangsmodul mit einer vorbestimmten Frequenz umgetastet wird.

3. Verfahren nach Anspruch 1 oder 2, wobei das Sende- und Empfangsmodul aus dem empfangenen Funkantwortsignal ein reelles Signal erzeugt.

4. Verfahren nach Anspruch 3, wobei das Sende- und Empfangsmodul eine Decodierung der durch das Funkantwortsignal übertragenen Daten und eine Abstandsmessung basierend auf dem reellen Signal durchführt.

5. Verfahren nach Anspruch 1, wobei das Sende- und Empfangsmodul eine Dekodierung der durch das Funkantwortsignal übertragenen Daten und eine Abstandsmessung basierend auf dem empfangenen Funkantwortsignal durchführt.

6. Verfahren nach einem der vorhergehenden Ansprüche, wobei das unmodulierte Dauerstrichsignal nach erfolgter Datendekodierung und/oder erfolgter Abstandsmessung für eine vorbestimmte Zeit erneut erzeugt wird (S7).

7. Verfahren nach einem der vorhergehenden Ansprüche, wobei die Phase des unmodulierten Dauerstrichsignals mit einer vorbestimmten Frequenz verschoben wird, wobei die Verschiebung vorzugsweise +/- 90° beträgt.

8. Verfahren nach Anspruch 7, wobei die Phasenverschiebung in dem Sende- und Empfangsmodul oder in der Transpondervorrichtung durchgeführt wird.

9. Dauerstrich-Radarsystem (10), umfassend:
- ein Sende- und Empfangsmodul (12), welches eingerichtet ist, um ein unmoduliertes Dauerstrichsignal mit einer vorbestimmten Frequenz und ein frequenzmoduliertes Dauerstrichsignal zu erzeugen, und
- mindestens eine Transpondervorrichtung (14, 16, 18; 108, 110, 112), die zum Senden eines Funkantwortsignals in Reaktion auf ein Abfragesignal eingerichtet ist,
- Abtastungsmittel zum Abtasten eines vorbestimmten Frequenzbereichs vor der Erzeugung eines unmodulierten Dauerstrichsignals, um freie Frequenzbänder zu bestimmen, wobei die vorbestimmte Frequenz des unmodulierten Dauerstrichsignals in einem freien Frequenzband liegt,
wobei das Sende- und Empfangsmodul ferner eingerichtet ist, um das unmodulierte Dauerstrichsignal als ein Abfragesignal zum Suchen einer Transpondervorrichtung zu erzeugen und um das frequenzmodulierte Dauerstrichsignal in Reaktion auf ein Funkantwortsignal von einer Transpondervorrichtung zu erzeugen.

10. Dauerstrich-Radarsystem (10) nach Anspruch 9, wobei das Sende- und Empfangsmodul Frequenzumtastungsmittel zum Umtasten der Frequenz des unmodulierten Dauerstrichsignals während des Suchens einer Transpondervorrichtung umfasst.

11. Dauerstrich-Radarsystem (10) nach Anspruch 9 oder 10, umfassend einen Mischer zur Erzeugung eines reellen Signals aus dem empfangenen Funkantwortsignal.

12. Dauerstrich-Radarsystem (10) nach Anspruch 11, umfassend eine Demodulationseinheit zur Dekodierung der durch das Funkantwortsignal übertragenen Daten und eine Auswerteeinheit zur Abstandsmessung, wobei die Dekodierung und die Abstandsmessung basierend auf dem reellen Signal erfolgen.

13. Dauerstrich-Radarsystem (10) nach Anspruch 9, wobei das Sende- und Empfangsmodul einen komplexen Empfänger umfasst.

14. Dauerstrich-Radarsystem (10) nach einem der Ansprüche 9 bis 13, wobei das Sende- und Empfangsmodul eingerichtet ist, um das unmodulierte Dauerstrichsignal nach erfolgter Datendekodierung und/oder erfolgter Abstandsmessung für eine vorbestimmte Zeit erneut zu erzeugen.

15. Dauerstrich-Radarsystem (10) nach einem der Ansprüche 9 bis 14, umfassend Phasenverschiebungsmittel zum Verschieben der Phase des unmodulierten Dauerstrichsignals mit einer vorbestimmten Frequenz verschoben wird, wobei die Verschiebung vorzugsweise +/- 90° beträgt.

16. Dauerstrich-Radarsystem (10) nach Anspruch 15, wobei die Phasenverschiebungsmittel in dem Sende- und Empfangsmodul oder in der Transpondervorrichtung angeordnet sind.

17. Mobiles Bedien- und Beobachtungsgerät (106) für die Automatisierungskomponenten (102) einer technischen Anlage (104), umfassend ein Sende- und Empfangsmodul (12), welches eingerichtet ist, um ein unmoduliertes Dauerstrichsignal mit einer vorbestimmten Frequenz und ein frequenzmoduliertes Dauerstrichsignal zu erzeugen, wobei das Sende- und Empfangsmodul ferner eingerichtet ist, um das unmodulierte Dauerstrichsignal zum Suchen einer Transpondervorrichtung zu erzeugen und um das frequenzmodulierte Dauerstrichsignal in Reaktion auf ein Funkantwortsignal von einer Transpondervorrichtung zu erzeugen, wobei das mobile Bedien- und Beobachtungsgerät ferner Abtastungsmittel zum Abtasten eines vorbestimmten Frequenzbereichs vor der Erzeugung eines unmodulierten Dauerstrichsignals umfasst, um freie Frequenzbänder zu bestimmen, wobei die vorbestimmte Frequenz des unmodulierten Dauerstrichsignals in einem freien Frequenzband liegt.

18. Mobiles Bedien- und Beobachtungsgerät (106) nach Anspruch 17, umfassend Frequenzumtastungsmittel zum Umtasten der Frequenz des unmodulierten Dauerstrichsignals während des Suchens einer Transpondervorrichtung.

19. Mobiles Bedien- und Beobachtungsgerät (106) nach Anspruch 17 oder 18, umfassend einen Mischer zur Erzeugung eines reellen Signals aus dem empfangenen Funkantwortsignal.

20. Mobiles Bedien- und Beobachtungsgerät (106) nach Anspruch 19, umfassend eine Demodulationseinheit zur Dekodierung der durch das Funkantwortsignal übertragenen Daten und eine Auswerteeinheit zur Abstandsmessung, wobei die Dekodierung und die Abstandsmessung basierend auf dem reellen Signal erfolgen.

21. Mobiles Bedien- und Beobachtungsgerät (106) nach Anspruch 17, umfassend einen komplexen Empfänger.

22. Mobiles Bedien- und Beobachtungsgerät (106) nach einem der Ansprüche 17 bis 21, wobei das Sende- und Empfangsmodul eingerichtet ist, um das unmodulierte Dauerstrichsignal nach erfolgter Datendekodierung und/oder erfolgter Abstandsmessung für eine vorbestimmte Zeit erneut zu erzeugen.

23. Mobiles Bedien- und Beobachtungsgerät (106) nach einem der Ansprüche 17 bis 22, umfassend Phasenverschiebungsmittel zum Verschieben der Phase des unmodulierten Dauerstrichsignals mit einer vorbestimmten Frequenz vorzugsweise um +/-90°.

24. Mobiles Bedien- und Beobachtungsgerät (106) nach Anspruch 23, wobei die Phasenverschiebungsmittel in dem Sende- und Empfangsmodul angeordnet sind.

25. HMI-System, umfassend mindestens ein mobiles Bedien- und Beobachtungsgerät (106) nach einem der Ansprüche 17 bis 24.

## Claims

1. Method for distance measurement and data transmission in a continuous wave radar system (10) in which a transmit and receive module (12) and at least one transponder device (14, 16, 18; 108, 110, 112) are disposed, comprising the steps of:
- generating (S2) an unmodulated continuous wave signal at a predetermined frequency in the transmit and receive module, wherein prior to the generation of an unmodulated continuous wave signal a predetermined frequency range is sampled (S1) in order to determine free frequency bands, and wherein the predetermined frequency of the unmodulated continuous wave signal lies in a free frequency band,
- searching (S3) for a transponder device with the aid of the unmodulated continuous wave signal as an interrogation signal,
- sending (S4) a radio response signal in response to the interrogation signal from a transponder device to the transmit and receive module,
- generating (S5) a frequency-modulated continuous wave signal in the transmit and receive module in response to the radio response signal, and
- measuring (S6) a distance between the transmit and receive module and the transponder device with the aid of the frequency-modulated continuous wave signal.

2. Method according to claim 1, wherein the radiation frequency of the unmodulated continuous wave signal is keyed at a predetermined frequency in the transmit and receive module during the search for a transponder device.

3. Method according to claim 1 or 2, wherein the transmit and receive module generates a real signal from the received radio response signal.

4. Method according to claim 3, wherein the transmit and receive module performs a decoding of the data transmitted by means of the radio response signal and a distance measurement based on the real signal.

5. Method according to claim 1, wherein the transmit and receive module performs a decoding of the data transmitted by means of the radio response signal and a distance measurement based on the received radio response signal.

6. Method according to one of the preceding claims, wherein the unmodulated continuous wave signal is generated once again for a predetermined time (S7) following completion of data decoding and/or distance measurement.

7. Method according to one of the preceding claims, wherein the phase of the unmodulated continuous wave signal is shifted at a predetermined frequency, the shift preferably amounting to +/- 90°.

8. Method according to claim 7, wherein the phase shift is performed in the transmit and receive module or in the transponder device.

9. Continuous wave radar system (10), comprising:
- a transmit and receive module (12) which is configured for generating an unmodulated continuous wave signal at a predetermined frequency and a frequency-modulated continuous wave signal, and
- at least one transponder device (14, 16, 18; 108, 110, 112) which is configured for sending a radio response signal in response to an interrogation signal,
- sampling means for sampling a predetermined frequency range prior to the generation of an unmodulated continuous wave signal in order to determine free frequency bands, wherein the predetermined frequency of the unmodulated continuous wave signal lies in a free frequency band,
wherein the transmit and receive module is also configured for generating the unmodulated continuous wave signal as an interrogation signal for searching for a transponder device and for generating the frequency-modulated continuous wave signal in response to a radio response signal from a transponder device.

10. Continuous wave radar system (10) according to claim 9, wherein the transmit and receive module comprises frequency shift keying means for keying the frequency of the unmodulated continuous wave signal during the search for a transponder device.

11. Continuous wave radar system (10) according to claim 9 or 10, comprising a mixer for generating a real signal from the received radio response signal.

12. Continuous wave radar system (10) according to claim 11, comprising a demodulation unit for decoding the data transmitted by means of the radio response signal and an evaluation unit for distance measurement, wherein the decoding and the distance measurement are performed based on the real signal.

13. Continuous wave radar system (10) according to claim 9, wherein the transmit and receive module comprises a complex receiver.

14. Continuous wave radar system (10) according to one of claims 9 to 13, wherein the transmit and receive module is configured for generating the unmodulated continuous wave signal once again for a predetermined time following completion of data decoding and/or distance measurement.

15. Continuous wave radar system (10) according to one of claims 9 to 14, comprising phase shifting means for shifting the phase of the unmodulated continuous wave signal at a predetermined frequency, with the shift preferably amounting to +/- 90°.

16. Continuous wave radar system (10) according to claim 15, wherein the phase shifting means are disposed in the transmit and receive module or in the transponder device.

17. Mobile control and monitoring device (106) for the automation components (102) of a technical system (104), comprising a transmit and receive module (12) which is configured for generating an unmodulated continuous wave signal at a predetermined frequency and a frequency-modulated continuous wave signal, wherein the transmit and receive module is also configured for generating the unmodulated continuous wave signal for searching for a transponder device and for generating the frequency-modulated continuous wave signal in response to a radio response signal from a transponder device, wherein the mobile control and monitoring device additionally comprises sampling means for sampling a predetermined frequency range prior to the generation of an unmodulated continuous wave signal in order to determine free frequency bands, wherein the predetermined frequency of the unmodulated continuous wave signal lies in a free frequency band.

18. Mobile control and monitoring device (106) according to claim 17, comprising frequency shift keying means for keying the frequency of the unmodulated continuous wave signal during the search for a transponder device.

19. Mobile control and monitoring device (106) according to claim 17 or 18, comprising a mixer for generating a real signal from the received radio response signal.

20. Mobile control and monitoring device (106) according to claim 19, comprising a demodulation unit for decoding the data transmitted by means of the radio response signal and an evaluation unit for distance measurement, wherein the decoding and the distance measurement are performed based on the real signal.

21. Mobile control and monitoring device (106) according to claim 17, comprising a complex receiver.

22. Mobile control and monitoring device (106) according to one of claims 17 to 21, wherein the transmit and receive module is configured for generating the unmodulated continuous wave signal once again for a predetermined time following completion of data decoding and/or distance measurement.

23. Mobile control and monitoring device (106) according to one of claims 17 to 22, comprising phase shifting means for shifting the phase of the unmodulated continuous wave signal at a predetermined frequency preferably by +/- 90°.

24. Mobile control and monitoring device (106) according to claim 23, wherein the phase shifting means are disposed in the transmit and receive module.

25. HMI system, comprising at least one mobile control and monitoring device (106) according to one of claims 17 to 24.

## Revendications

1. Procédé de mesure de distance et de transmission de données dans un système ( 10 ) de radar à onde continue, dans lequel un module ( 12 ) d'émission et de réception et au moins un dispositif ( 14, 16, 18 ; 108, 110, 112 ) de transpondeur sont disposés, comprenant les stades, dans desquels :
- on produit ( S2 ) un signal à onde continue non modulé d'une fréquence déterminée à l'avance dans le module d'émission et de réception, en balayant ( S1 ) une plage de fréquence déterminée à l'avance avant la production d'un signal en onde continue non modulé pour déterminer des bandes de fréquences libres et la fréquence déterminée à l'avance du signal en onde continue non modulé se trouvant dans une bande de fréquences libre,
- on recherche ( S3 ) un dispositif transpondeur à l'aide du signal en onde continue non modulé comme signal d'interrogation,
- on émet ( S4 ) un signal radio de réponse en réaction au signal d'interrogation d'un dispositif transpondeur au module d'émission et de réception,
- on produit ( S5 ) un signal en onde continue modulé en fréquence dans le module d'émission et de réception en réaction au signal radio de réponse, et
- on mesure ( S6 ) une distance entre le module d'émission et de réception et le dispositif transpondeur à l'aide du signal en onde continue modulé en fréquence.

2. Procédé suivant la revendication 1, dans lequel on balaye, à une fréquence déterminée à l'avance dans le module d'émission et de réception, la fréquence d'émission du signal en onde continue non modulé pendant la recherche d'un dispositif transpondeur.

3. Procédé suivant la revendication 1 ou 2, dans lequel le module d'émission et de réception produit un signal réel à partir du signal radio de réponse reçu.

4. Procédé suivant la revendication 3, dans lequel le module d'émission et de réception effectue un décodage par des données transmises par le signal radio de réponse et une mesure de distance reposant sur le signal réel.

5. Procédé suivant la revendication 1, dans lequel le module d'émission et de réception effectue un décodage des données transmises par le signal radio de réponse et une mesure de distance reposant sur le signal radio de réponse qui est reçu.

6. Procédé suivant l'une des revendications précédentes, dans lesquelles on produit ( S7 ) à nouveau, pendant un temps déterminé à l'avance, le signal en onde continue non modulé après avoir effectué un décodage de données et/ou après avoir effectué une mesure de distances.

7. Procédé suivant l'une des revendications précédentes, dans lequel on décale la phase du signal en onde continue non modulé ayant une fréquence déterminée à l'avance, le décalage étant de préférence de +/- 90°.

8. Procédé suivant la revendication 7, dans lequel on effectue le décalage de phase dans le module d'émission et de réception ou dans le dispositif transpondeur.

9. Système ( 10 ) de radar à onde continue comprenant :
- un module ( 12 ) d'émission et de réception qui est conçu pour produire un signal à onde continue non modulé ayant une fréquence déterminée à l'avance et un signal à onde continue modulé en fréquence, et
- au moins un dispositif ( 14, 16, 18 ; 108, 110, 112 ) de transpondeur qui est conçu pour l'émission d'un signal radio de réponse en réaction à un signal d'interrogation,
- des moyens de balayage pour le balayage d'une plage de fréquence déterminée à l'avance avant la production d'un signal à onde continue non modulé pour déterminer des bandes de fréquence libres, la fréquence déterminée à l'avance du signal à onde continue non modulé se trouvant dans une bande de fréquence libre,
- le module d'émission et de réception étant conçu en outre pour produire le signal à onde continue non modulé comme signal d'interrogation pour rechercher un dispositif transpondeur et pour produire le signal à onde continue modulé en fréquence en réaction à un signal radio de réponse d'un dispositif transpondeur.

10. Système ( 10 ) de radar à onde continue suivant la revendication 9, dans lequel le module d'émission et de réception comprend des moyens de balayage de fréquence pour balayer la fréquence du signal à onde continue non modulé pendant la recherche d'un dispositif transpondeur.

11. Système ( 10 ) de radar à onde continue suivant la revendication 9 ou 10, comprenant un mélangeur de production d'un signal réel à partir du signal radio de réponse qui est reçu.

12. Système ( 10 ) de radar à onde continue suivant la revendication 11, comprenant une unité de démodulation pour décoder les données transmises par le signal radio de réponse et une unité d'exploitation pour la mesure de distance, le décodage et la mesure de distance s'effectuant sur la base du signal réel.

13. Système ( 10 ) de radar à onde continue suivant la revendication 9, dans lequel les modules d'émission et de réception comprennent un récepteur complexe.

14. Système ( 10 ) de radar à onde continue suivant l'une des revendications 9 à 13, dans lequel le module d'émission et de réception est conçu pour produire à nouveau, pendant un temps déterminé à l'avance, le signal à onde continue non modulé après que le codage de données a été effectué et/ou après que la mesure de la distance a été effectuée.

15. Système ( 10 ) de radar à onde continue suivant l'une des revendications 9 à 14, comprenant un moyen de décalage de phase pour décaler la phase du signal à onde continue non modulé ayant une fréquence déterminée à l'avance, le décalage étant de préférence de +/- 90°.

16. Système ( 10 ) de radar à onde continue suivant la revendication 15, dans lequel les moyens de décalage de phase sont mis dans le module d'émission et de réception/ou dans le dispositif transpondeur.

17. Appareil ( 106 ) mobile de commande et d'observation de composants ( 102 ) d'automatisation d'une installation ( 104 ) technique, comprenant un module ( 12 ) d'émission et de réception qui est conçu pour produire un signal à onde continue non modulé ayant une fréquence déterminée à l'avance et un signal à onde continue modulé en fréquence, le module d'émission et de réception étant conçu en outre pour produire le signal à onde continue non modulé pour la recherche d'un dispositif transpondeur et pour produire le signal à onde continue modulé en fréquence en réaction à un signal radio de réponse d'un dispositif transpondeur, l'appareil mobile de commande et d'observation comprenant en outre des moyens de balayage pour le balayage d'une plage de fréquence déterminée à l'avance avant la production d'un signal à onde continue non modulé afin de déterminer des bandes de fréquence libres, la fréquence déterminée à l'avance du signal à onde continue non modulé se trouvant dans une bande de fréquence libre.

18. Appareil ( 106 ) mobile de commande et d'observation suivant la revendication 17, comprenant des moyens de balayage de fréquence pour balayer la fréquence du signal à onde continue non modulé pendant la recherche d'un dispositif transpondeur.

19. Appareil ( 106 ) mobile de commande et d'observation suivant la revendication 17 ou 18, comprenant un mélangeur de production d'un signal réel à partir du signal radio de réponse qui est reçu.

20. Appareil ( 106 ) mobile de commande et d'observation suivant la revendication 19, comprenant une unité de démodulation pour décoder les données transmises par le signal radio de réponse et une unité d'exploitation pour la mesure de distance, le décodage et la mesure de distance s'effectuant sur la base du signal réel.

21. Appareil ( 106 ) mobile de commande et d'observation suivant la revendication 17, comprenant un récepteur complexe.

22. Appareil ( 106 ) mobile de commande et d'observation suivant l'une des revendications 17 à 21, dans lequel le module d'émission et de réception est conçu pour produire à nouveau, pendant un temps déterminé à l'avance, le signal à onde continue non modulé après que le codage de données a été effectué et/ou après que la mesure de la distance a été effectuée.

23. Appareil ( 106 ) mobile de commande et d'observation suivant l'une des revendications 17 à 22, comprenant un moyen de décalage de phase pour décaler la phase du signal à onde continue non modulé ayant une fréquence déterminée à l'avance, le décalage étant de préférence de +/- 90°.

24. Appareil ( 106 ) mobile de commande et d'observation suivant la revendications 23, dans lequel les moyens de décalage de phase sont mis dans le module d'émission et de réception.

25. Système HMI comprenant au moins un appareil ( 106 ) mobile de commande et d'observation suivant l'une des revendications 17 à 24.
